# EUROPÄISCHE PATENTSCHRIFT

(11) **EP 0 851 182 B1**
(45) Veröffentlichungstag und Bekanntmachung des Hinweises auf die Patenterteilung: **29.01.2003**
(21) Anmeldenummer: 97121005.9
(22) Anmeldetag: 29.11.1997
(51) Int. Cl.: F24J 2/00, G02B 5/20

(54) **Aussenwand für Gebäude, insbesondere Paneel im Brüstungsbereich einer Gebäudewand**
Outer wall for building, more particularly wainscot panel for the breastwork area of a buiding wall
Paroi extérieure pour bâtiment, en particulier panneau de lambris pour la zone d'appui de la paroi d'un bâtiment

(30) Priorität: 24.12.1996 DE 19654383
(43) Veröffentlichungstag der Anmeldung: 01.07.1998
(73) Patentinhaber: NORSK HYDRO ASA, 0257 Oslo 2 (NO)
(72) Erfinder: Schulz, Harald, 86381 Krumbach (DE)
(74) Vertreter: Dziewior, Joachim, Dipl.-Phys. Dr.

(56) Entgegenhaltungen:
- WO-A-95/10741
- US-A- 4 006 730
- US-A- 4 034 129
- US-A- 5 543 634
- PATENT ABSTRACTS OF JAPAN vol. 006, no. 216 (M-168), 29. Oktober 1982 (1982-10-29) & JP 57 122244 A (HITACHI SEISAKUSHO KK), 30. Juli 1982 (1982-07-30)

## Beschreibung

Die Erfindung betrifft einen Außenwandaufbau für Gebäude, insbesondere Paneel im Brüstungsbereich einer Gebäudewand, bei welchem zur Nutzung von Solarenergie eine für Solarstrahlung zumindest teildurchlässige außenseitige Wandschale sowie eine eine Wärmedämmschicht aufweisende innenseitige Wandschale vorgesehen ist, wobei die außenseitige Wandschale aus Einfachglas, Mehrfachisolierglas, Verbundglas oder hieraus gebildeten Kombinationen besteht.

Ein derartiger Außenwandaufbau ist beispielsweise aus der WO 95/10 741 bekannt. Hiervon ausgehend liegt der Erfindung die Aufgabe zugrunde, eine Gestaltung des Außenwandaufbaus derart vorzunehmen, daß er für das menschliche Auge undurchsichtig ist, gleichwohl aber eine ausreichende Durchlässigkeit für die Sonnenenergie gewährleistet ist.

Diese Aufgabe wird nach einer ersten Ausgestaltung der Erfindung dadurch gelöst, daß wenigstens eine der zur Innenseite des Gebäudes hin gelegenen Glasoberflächen der außenseitigen Wandschale, also die von der Außenseite aus gesehen an Position 2, 3 oder größer sich befindende Oberfläche, eine für Solarstrahlung teilweise durchlässige, visuell dagegen undurchlässige Funktionsschicht aufweist, die aus inselartig angeordneten, regelmäßig oder unregelmäßig über die Glasfläche verteilten opaken Zonen besteht, wobei die Zwischenräume zwischen den opaken Zonen eine vorgegebene Maximalbreite nirgends überschreiten, die sich aus dem kürzest möglichen Betrachtungsabstand derart bestimmt, daß die Zwischenräume durch das menschliche Auge noch nicht aufgelöst werden können.

Nach einer weiteren Ausgestaltung der Erfindung weist wenigstens eine der zur Innenseite des Gebäudes hin gelegenen Glasoberflächen der außenseitigen Wandschale, also die von der Außenseite aus gesehen an Position 2, 3 oder größer sich befindende Oberfläche, eine für Solarstrahlung teilweise durchlässige, visuell dagegen undurchlässige Funktionsschicht auf, die aus einer dünnen Lack- oder Emailschicht besteht, wobei die Dicke der Lack- bzw. Emailschicht entsprechend der durchzulassenden Sonnenenergie, wenigstens aber so gewählt ist, daß sie für das Auge opak erscheint. Diese Schicht kann in Form eines Sprühnebels aufgebracht sein, wobei die gewünschte Durchlässigkeit für Sonnenenergie gegebenenfalls auch durch die Größe der Pigmentierung gewählt werden kann. Der durch die Erfindung erreichte Vorteil besteht im wesentlichen darin, daß die Zwischenräume zwischen den opaken Zonen eine ausreichende Durchlässigkeit für die Sonnenenergie besitzen, diese jedoch vom menschlichen Auge nicht wahrgenommen werden, da ihre Breite unterhalb des Auflösungsvermögens des menschlichen Auges liegt.
Je nach örtlicher Gegebenheit können die Zwischenräume zwischen den Zonen an den Betrachtungsabstand angepaßt sein, also etwa vom Erdgeschoß zu den oberen Etagen hin in ihrer Breite zunehmen.

In bevorzugter Ausführungsform der Erfindung wird durch Wahl des Flächenverhältnisses der opaken Zonen zu den zwischen ihnen verlaufenden Zwischenräumen eine Abstimmung des von der außenseitigen Wandschale gebildeten Wärmedurchgangswiderstandes R]a[ und deren Gesamtenergiedurchlaßgrad g derart erreicht, daß bei der zu erwartenden größtmöglichen Solareinstrahlung und der zu erwartenden maximalen sommerlichen Außentemperatur sowohl im Inneren des Wandaufbaus höchstens eine solche maximale Wandtemperatur entsteht, die von den Werkstoffen im Wandaufbau noch ohne Schädigung ertragen wird, als auch an der Wandinnenoberfläche höchstens eine maximale Oberflächentemperatur entsteht, die von im Rauminneren befindlichen Personen noch als behaglich empfunden wird. Im einzelnen kann diese Abstimmung nach den in der eingangs erwähnten WO 95/10 741 angegebenen Regeln erfolgen.

Um im übrigen den Außenwandaufbau individuell gestalten zu können, sieht die Erfindung vor, daß eine der Glasflächen der außenseitigen Wandschale eine dekorative Schicht in Form einer farblichen und/oder strukturellen Gestaltung aufweist, die die das von außen gegen die außenseitige Wandschale gesehene visuelle Erscheinungsbild des Außenwandaufbaus bestimmt.
Bei einer aus Verbundglas bestehenden außenseitigen Wandschale empfiehlt es sich im Rahmen der Erfindung, daß sich die Funktionsschicht auf Position 2, 3 oder 4, die dekorative Schicht auf Position 1 oder 2 und gegebenenfalls eine L-E(Low Emissivity)-Schicht auf Position 4 befindet.
Bei einer aus Zweifachisolierglas bestehenden außenseitigen Wandschale wird im Rahmen der Erfindung vorgeschlagen, daß sich die dekorative Schicht auf Position 1 und/oder 2, die Funktionsschicht auf Position 3 und/oder 4 und gegebenenfalls eine L-E-Schicht auf Position 3 und/oder 4 befindet. Dabei kann die dekorative Schicht auf Position 2 auch mit der Funktionsschicht oder einer L-E-Schicht kombiniert sein. Auch besteht die Möglichkeit, daß statt der dekorativen Schicht ein im Körper eingefärbtes Glas verwendet wird. Von besonderem Vorteil ist es dabei, wenn auf Position 2 eine Sonnenschutz- und L-E-Schicht, auf Position 3 die Funktionsschicht und auf Position 4 eine L-E-Schicht vorgesehen ist.

Bei einer aus Dreifachisolierglas bestehenden außenseitigen Wandschale sind die Positionen 1 bis 4 zweckmäßigerweise in gleicher Weise wie das Zweifachisolierglas ausgestaltet, wobei die Position 5 eine Funktionsschicht oder eine L-E-Schicht aufweist.

Die opaken Zonen der Funktionsschicht sind zweckmäßigerweise farblich schwarz oder unter Berücksichtigung ästhetischer Gesichtspunkte sowie des Einflusses auf den g-Wert in einer beliebigen anderen Farbe gestaltet.

Um ein möglichst homogenes Erscheinungsbild zu erreichen, weisen die opaken Zonen der Funktionsschicht zweckmäßigerweise die Gestalt von Kreisen, Quadraten, Rechtecken, Dreiecken, Sechsecken oder dergleichen oder von Linienstrukturen, Gittern und dergleichen auf. Dabei können die opaken Zonen der Funktionsschicht von einer Emaillierung, einer organischen Beschichtung, einer Silikonschicht oder einer PVD-Schicht gebildet sein. Der Materialauftrag erfolgt dabei - außer bei der PVD(Physical Vapour Deposition)-Schicht - in der Regel im Siebdruckverfahren.
Schließlich sind die Zwischenräume zwischen den opaken Zonen der Funktionsschicht bei der PVD-Schicht vorteilhafterweise durch Materialabtrag, z. B. mittels eines Lasers, gebildet. Somit kann in einfach herzustellender Weise eine zunächst ganzflächige Beschichtung erfolgen, in der nachträglich die Zwischenräume zwischen den opaken Zonen freigelegt werden.
Im folgenden wird die Erfindung an in der Zeichnung dargestellten Ausführungsbeispielen näher erläutert; es zeigen:
- Fig. 1: eine nur teilweise Darstellung des Außenwandaufbaus mit einer Außenschale aus Einfachglas,
- Fig. 2: eine der Fig. 1 entsprechende Darstellung, jedoch unter Verwendung von Verbundglas,
- Fig. 3: eine der Fig. 1 entsprechende Darstellung, jedoch unter Verwendung von Zweifachisolierglas,
- Fig. 4: eine der Fig. 1 entsprechende Darstellung, jedoch unter Verwendung von Dreifachisolierglas,
- Fig. 5: in den Teilfig. a) bis d) eine Draufsicht auf die Funktionsschicht mit unterschiedlich gestalteten opaken Zonen.

In der Zeichnung ist der Außenwandaufbau für Gebäude, wie er insbesondere in Form eines Paneels im Brüstungsbereich einer Gebäudewand Anwendung findet, lediglich schematisch dargestellt. Zur Nutzung von Solarenergie ist eine für Solarstrahlung zumindest teildurchlässige außenseitige Wandschale 1 sowie eine mit einer Wärmedämmschicht 2 versehene innenseitige Wandschale 3 vorgesehen. Die außenseitige Wandschale 1 kann dabei aus Einfachglas 4, Mehrfachisolierglas, Verbundglas oder auch aus hieraus gebildeten Kombinationen bestehen.
Eine der zur Innenseite des Gebäudes hin gelegenen Glasoberflächen der außenseitigen Wandschale, also an der von der Außenseite aus gesehenen Position 2, 3 oder größer, weist eine für Solarstrahlung teilweise durchlässige Funktionsschicht 5 auf, die jedoch für das menschliche Auge undurchsichtig ist. Dazu besteht die Funktionsschicht aus inselartig angeordneten, regelmäßig oder unregelmäßig über die Glasfläche verteilten opaken Zonen 6. Die Zwischenräume 7 zwischen diesen Zonen 6 sind dabei so gewählt, daß sie nirgends eine vorgegebene Maximalbreite überschreiten, die sich aus dem kürzestmöglichen Betrachtungsabstand derart bestimmt, daß die Zwischenräume 7 durch das menschliche Auge nicht aufgelöst werden können.

Es besteht jedoch auch die in der Zeichnung nicht dargestellte Möglichkeit, daß die für Solarstrahlung teilweise durchlässige, visuell dagegen undurchlässige Funktionsschicht an den schon genannten Glasoberflächen der außenseitigen Wandschale aus einer dünnen Lack- oder Emailschicht besteht. Die Dicke der Lack- bzw. Emailschicht ist dabei entsprechend der durchzulassenden Sonnenenergie, wenigstens aber so gewählt, daß sie für das Auge opak erscheint. Die Aufbringung der Lackschicht kann in der Art eines Sprühnebels erfolgen, wobei die Durchlässigkeit sowohl durch die Dicke der Schicht als auch durch die Größe der Pigmente eingestellt werden kann. Denkbar sind Pigmentgrößen im Bereich von 10 - 50 Mikrometer.

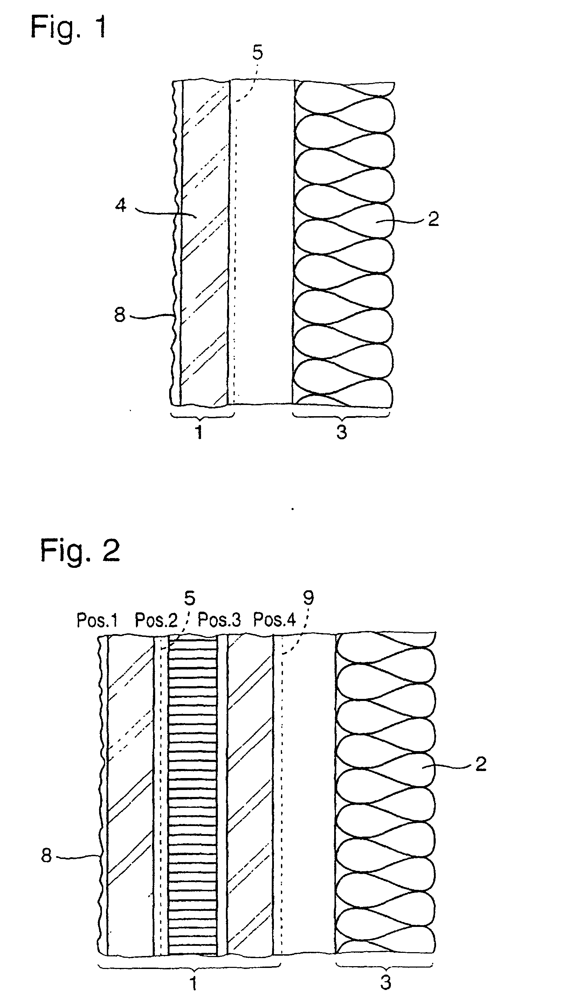

Darüber hinaus wird durch geeignete Wahl des Flächenverhältnisses der opaken Zonen 6 zu den zwischen ihnen verlaufenden Zwischenräumen 7 eine Abstimmung des von der außenseitigen Wandschale gebildeten Wärmedurchgangswiderstandes R]a[ und deren Gesamtenergiedurchlaßwiderstand g vorgenommen. Diese Abstimmung erfolgt so, daß bei der zu erwartenden größtmöglichen Sonneneinstrahlung und der zu erwartenden maximalen sommerlichen Außentemperatur einerseits im Inneren des Wandaufbaus höchstens eine solche maximale Wandtemperatur entsteht, die von den Werkstoffen im Wandaufbau noch ohne Schädigung ertragen wird, andererseits auch an der Wandinnenoberfläche höchstens eine maximale Oberflächentemperatur entsteht, die vom im Rauminneren befindlichen Personen noch als behaglich empfunden wird.
Eine der Glasflächen der außenseitigen Wandschale 1 weist eine dekorative Schicht 8 in Form einer farblichen oder auch strukturellen Gestaltung auf, die das - von außen gegen die außenseitige Wandschale 1 gesehen - visuelle Erscheinungsbild des Außenwandaufbaus bestimmt.
Bei einer aus Verbundglas bestehenden außenseitigen Wandschale, wie sie in Fig. 2 dargestellt ist, kann sich die Funktionsschicht 5 auf Position 2, 3 oder 4 und die dekorative Schicht 8 auf Position 1 oder 2 befinden. Zusätzlich kann eine L-E(Low Emissivity)-Schicht 9 auf Position 4 angeordnet werden.

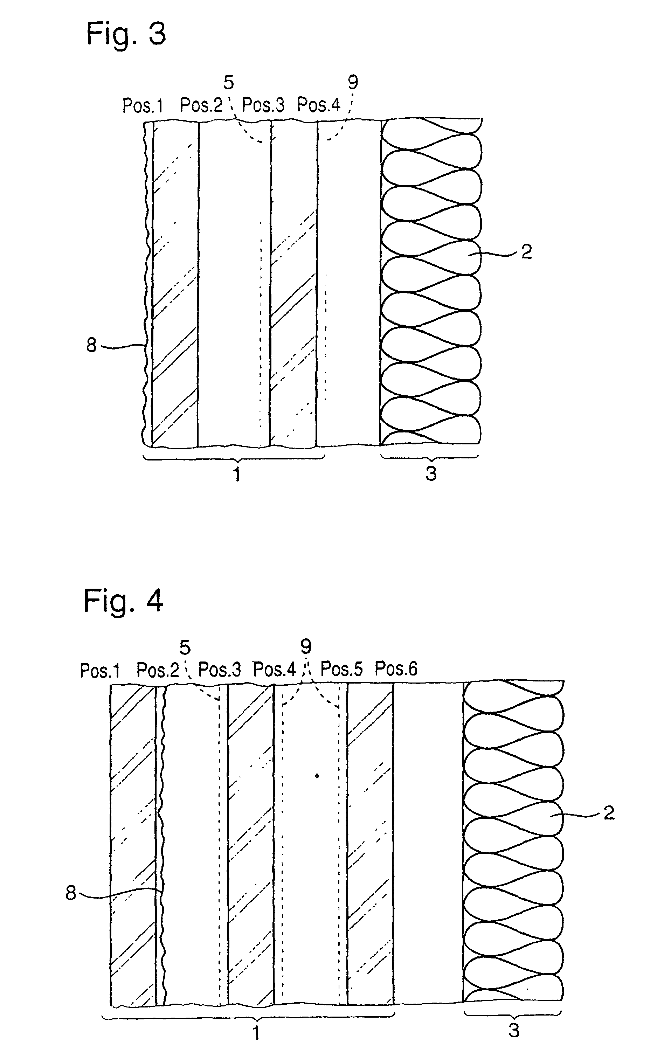

Bei einer aus Zweifachisolierglas bestehenden außenseitigen Wandschale 1, wie sie in Fig. 3 dargestellt ist, kann sich die dekorative Schicht 8 auf Position 1 und/oder 2, die Funktionsschicht 5 auf Position 3 und/oder 4 und gegebenenfalls eine L-E-Schicht 9 auf Position 3 und/oder 4 befinden. Dabei besteht auch die Möglichkeit, daß die dekorative Schicht 8 auf Position 2 angeordnet und mit der Funktionsschicht 5 oder der L-E-Schicht 9 kombiniert ist.
Bei einer aus Dreifachisolierglas bestehenden außenseitigen Wandschale 1, wie sie in Fig. 4 angedeutet ist, sind die Positionen 1 bis 4 zweckmäßigerweise in gleicher Weise ausgestaltet wie bei dem Zweifachisolierglas nach Fig. 3. Die Position 5 kann hier zusätzlich eine Funktionsschicht 5 oder eine L-E-Schicht 9 aufweisen.

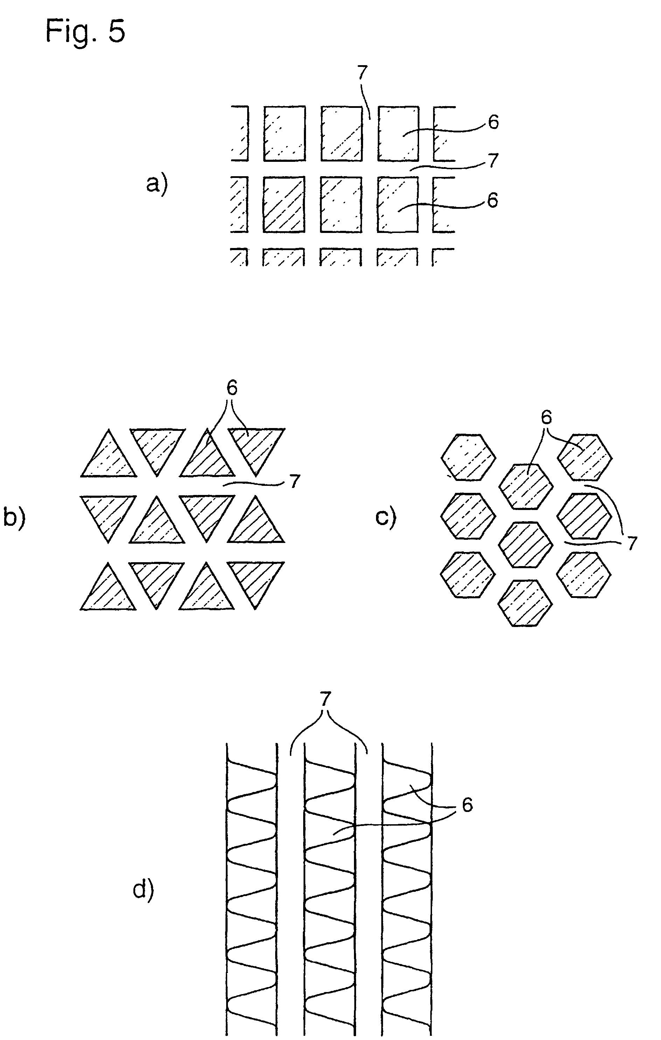

Die opaken Zonen 6 der Funktionsschicht 5 sind, wie die Fig. 5 beispielhaft zeigt, in Form von Kreisen, Quadraten, Rechtecken, Dreiecken, Sechsecken und dergleichen gestaltet, können aber auch Linienstrukturen, Gitter oder dergleichen aufweisen. Dabei sind die opaken Zonen 6 der Funktionsschicht 5 entweder farblich schwarz gestaltet, können aber unter Berücksichtigung ästhetischer Gesichtspunkte sowie des Einflusses auf den g-Wert auch eine beliebige andere Farbe aufweisen. Dabei sind die opaken Zonen 6 der Funktionsschicht 5 von einer Emaillierung, einer organischen Beschichtung oder auch von einer PVD(Physical Vapour Deposition)-Schicht gebildet. Die Aufbringung der opaken Zonen 6 kann vorteilhafterweise derart erfolgen, daß zunächst eine ganzflächige Beschichtung mit dem vorgesehenen Material erfolgt und im Anschluß daran die Zwischenräume 7 zwischen den opaken Zonen 6 der Funktionsschicht 5 durch Materialabtrag, z. B. mittels eines Lasers geschaffen werden.

## Patentansprüche

1. Außenwandaufbau für Gebäude, insbesondere Paneel im Brüstungsbereich einer Gebäudewand, bei welchem zur Nutzung von Solarenergie eine für Solarstrahlung zumindest teildurchlässige außenseitige Wandschale (1) sowie eine eine Wärmedämmschicht (2) aufweisende innenseitige Wandschale (3) vorgesehen ist, wobei die außenseitige Wandschale (1) aus Einfachglas (4), Mehrfachisolierglas, Verbundglas oder hieraus gebildeten Kombinationen besteht, **dadurch gekennzeichnet, daß** wenigstens eine der zur Innenseite des Gebäudes hin gelegenen Glasoberflächen der außenseitigen Wandschale (1), also die von der Außenseite aus gesehen an Position 2, 3 oder größer sich befindende Oberfläche, eine für Solarstrahlung teilweise durchlässige, visuell dagegen undurchlässige Funktionsschicht (5) aufweist, die aus inselartig angeordneten, regelmäßig oder unregelmäßig über die Glasfläche verteilten opaken Zonen (6) besteht, wobei die Zwischenräume (7) zwischen den opaken Zonen (6) eine vorgegebene Maximalbreite nirgends überschreiten, die sich aus dem kürzest möglichen Betrachtungsabstand derart bestimmt, daß die Zwischenräume (7) durch das menschliche Auge noch nicht aufgelöst werden können.

2. Außenwandaufbau für Gebäude, insbesondere Paneel im Brüstungsbereich einer Gebäudewand, bei welchem zur Nutzung von Solarenergie eine für Solarstrahlung zumindest teildurchlässige außenseitige Wandschale (1) sowie eine eine Wärmedämmschicht (2) aufweisende innenseitige Wandschale (3) vorgesehen ist, wobei die außenseitige Wandschale (1) aus Einfachglas (4) , Mehrfachisolierglas, Verbundglas oder hieraus gebildeten Kombinationen besteht, **dadurch gekennzeichnet, daß** wenigstens eine der zur Innenseite des Gebäudes hin gelegenen Glasoberflächen der außenseitigen Wandschale (1), also die von der Außenseite aus gesehen an Position 2, 3 oder größer sich befindende Oberfläche, eine für Solarstrahlung teilweise durchlässige, visuell dagegen undurchlässige Funktionsschicht (5) aufweist, die aus einer dünnen Lack- oder Emailschicht besteht, wobei die Dicke der Lack- bzw. Emailschicht entsprechend der durchzulassenden Sonnenenergie, wenigstens aber so gewählt ist, daß sie für das Auge opak erscheint.

3. Außenwandaufbau nach Anspruch 1 oder 2, **dadurch gekennzeichnet, daß** durch Wahl des Flächenverhältnisses der opaken Zonen (6) zu den zwischen ihnen verlaufenden Zwischenräumen (7) bzw. die Dicke der Lack- bzw. Emailschicht eine Abstimmung des von der außenseitigen Wandschale (1) gebildeten Wärmedurchgangswiderstand R]a[ und deren Gesamtenergiedurchlaßgrad g derart erreicht wird, daß bei der zu erwartenden größtmöglichen Solareinstrahlung und der zu erwartenden maximalen sommerlichen Außentemperatur sowohl im Inneren des Wandaufbaus höchstens eine solche maximale Wandtemperatur entsteht, die von den Werkstoffen im Wandaufbau noch ohne Schädigung ertragen wird, als auch an der Wandinnenoberfläche höchstens eine maximale Oberflächentemperatur entsteht, die von im Rauminneren befindlichen Personen noch als behaglich empfunden wird.

4. Außenwandaufbau nach einem der Ansprüche 1 bis 3, **dadurch gekennzeichnet, daß** eine der Glasflächen der außenseitigen Wandschale (1) eine dekorative Schicht (8) in Form einer farblichen und/oder strukturellen Gestaltung aufweist, die das von außen gegen die außenseitige Wandschale gesehene visuelle Erscheinungsbild des Außenwandaufbaus bestimmt.

5. Außenwandaufbau nach Anspruch 4, **dadurch gekennzeichnet, daß** bei einer aus Verbundglas bestehenden außenseitigen Wandschale (1) sich die Funktionsschicht (5) auf Position 2, 3 oder 4, die dekorative Schicht (8) auf Position 1 oder 2 und gegebenfalls eine L-E-Schicht (9) auf Position 4 befindet.

6. Außenwandaufbau nach Anspruch 4, **dadurch gekennzeichnet, daß** bei einer aus Zweifachisolierglas bestehenden außenseitigen Wandschale (1) sich die dekorative Schicht (8) auf Position 1 und/oder 2, die Funktionsschicht (5) auf Position 3 und/oder 4 und gegebenfalls eine L-E-Schicht (9) auf Position 3 und/oder 4 befindet.

7. Außenwandaufbau nach Anspruch 6, **dadurch gekennzeichnet, daß** die dekorative Schicht (8) auf Position 2 mit der Funktionsschicht (5) oder einer L-E-Schicht (9) kombiniert ist.

8. Außenwandaufbau nach Anspruch 6, **dadurch gekennzeichnet, daß** auf Position 2 eine Sonnenschutz- und L-E-Schicht (9), auf Position 3 die Funktionsschicht (5) und auf Position 4 eine L-E-Schicht (9) vorgesehen ist.

9. Außenwandaufbau nach Anspruch 4, **dadurch gekennzeichnet, daß** bei einer aus Dreifachisolierglas bestehenden außenseitigen Wandschale (1) die Positionen 1 bis 4 nach Anspruch 5 ausgestaltet und die Position 5 eine Funktionsschicht (5) oder L-E-Schicht (9) aufweist.

10. Außenwandaufbau nach einem der Ansprüche 1 bis 9, **dadurch gekennzeichnet, daß** die opaken Zonen (6) der Funktionsschicht (5) farblich schwarz oder unter Berücksichtigung ästhetischer Gesichtspunkte sowie des Einflusses auf den g-Wert in einer beliebigen anderen Farbe gestaltet sind.

11. Außenwandaufbau nach einem der Ansprüche 1 bis 10, **dadurch gekennzeichnet, daß** die opaken Zonen (6) der Funktionsschicht (5) die Gestalt von Kreisen, Quadraten, Rechtecken, Dreiecken, Sechsecken oder von Linienstrukturen, Gittern aufweisen.

12. Außenwandaufbau nach einem der Ansprüche 1 bis 11, **dadurch gekennzeichnet, daß** die opaken Zonen (6) der Funktionsschicht von einer Emaillierung, einer organischen Beschichtung, einer Silikonschicht oder einer PVD-Schicht gebildet ist.

13. Außenwandaufbau nach einem der Ansprüche 1 bis 12 außer 2, **dadurch gekennzeichnet, daß** die Zwischenräume zwischen den opaken Zonen (6) der Funktionsschicht (5) durch Materialabtrag, z.B. mittels eines Lasers, gebildet sind.

## Claims

1. Outer wall construction for buildings, in particular panel in the breastwork area of a building wall, in which for the utilisation of solar energy, there is provided an outer wall shell (1) that is at least partially translucent for solar radiation, as well as an inner wall shell (3) that has a thermal insulation layer (2), wherein the outer wall shell (1) comprises single glass (4), multi-layer insulation glass, laminated glass or combinations formed from these, **characterised in that**
at least one of the outer wall shell's (1) glass surfaces that are placed towards the inside of the building, i.e. the surface located at position 2, 3 or higher as seen from the exterior, has a functional layer (5) that is partially translucent for solar radiation but is visually impermeable, and which comprises opaque zones (6) that are arranged like islands, distributed regularly or irregularly over the glass surface, wherein the interspaces (7) between the opaque zones (6) never exceed a predetermined maximum width that is determined from the shortest possible viewing distance, such that the interspaces (7) cannot yet be resolved by the human eye.

2. Outer wall construction for buildings, in particular panel in the breastwork area of a building wall, in which for the utilisation of solar energy, an outer wall shell (1) that is at least partially translucent for solar radiation is provided, as well as an inner wall shell (3) that has a thermal insulation layer (2), wherein the outer wall shell (1) comprises single glass (4), multi-layer insulation glass, laminated glass or combinations formed from these, **characterised in that**
at least one of the outer wall shell's (1) glass surfaces that are placed towards the inside of the building, i.e. the surface located at position 2, 3 or higher as seen from the exterior, has a functional layer (5) that is partially translucent for solar radiation but is visually impermeable, and which comprises a thin layer of lacquer or enamel, wherein the thickness of the lacquer or enamel layer is selected according to the solar energy that is to be let through, but at least such that it appears opaque to the eye.

3. Outer wall construction in accordance with claim 1 or 2, **characterised in that** through the choice of the surface ratio of the opaque zones (6) to the interspaces (7) running between them, or the thickness of the lacquer or enamel layer, an adaptation is achieved between the heat transfer resistance R]a[ formed by the outer wall shell (1) and its total energy transmittance g in such a way that in the event of the anticipated greatest possible solar irradiation and the anticipated maximum summer outdoor temperature, there arises in the interior of the wall construction at most such a maximum wall temperature as can still be withstood by the materials in the wall construction without damage, and also at the wall inner surface there arises at most a maximum surface temperature such as is felt to be comfortable by people inside the room.

4. Outer wall construction in accordance with one of the claims 1 to 3, **characterised in that** one of the glass surfaces of the outer wall shell (1) has a decorative layer (8) which is in the form of a coloured and/or structural design, and which determines the visual appearance of the outer wall construction as viewed from the outside against the outer wall shell.

5. Outer wall construction in accordance with claim 4, **characterised in that** in the case of an outer wall shell (1) comprising laminated glass, the functional layer (5) is located at position 2, 3, or 4, the decorative layer (8) at position 1 or 2, and possibly an L-E [low emissivity] layer (9) at position 4.

6. Outer wall construction in accordance with claim 4, **characterised in that** in the case of an outer wall shell (1) comprising double insulation glass, the decorative layer (8) is located at position 1 and/or 2, the functional layer (5) at position 3 and/or 4, and possibly an L-E layer (9) at position 3 and/or 4.

7. Outer wall construction in accordance with claim 6, **characterised in that** the decorative layer (8) at position 2 is combined with the functional layer (5) or an L-E layer (9).

8. Outer wall construction in accordance with claim 6, **characterised in that** provided at position 2 there is a sun protection and L-E layer, at position 3 there is the functional layer (5), and at position 4 there is an L-E layer (9).

9. Outer wall construction in accordance with claim 4, **characterised in that** in the case of an outer wall shell (1) comprising triple insulation glass, positions 1 to 4 are structured according to claim 5, and position 5 has a functional layer (5) or L-E layer (9).

10. Outer wall construction in accordance with one of the claims 1 to 9, **characterised in that** the opaque zones (6) of the functional layer (5) are designed to be black in colour, or any other colour taking into account aesthetic aspects as well as the influence on the g-value.

11. Outer wall construction in accordance with one of the claims 1 to 10, **characterised in that** in the opaque zones (6) of the functional layer (5) have the shape of circles, squares, rectangles, triangles, hexagons, or of line structures, grids.

12. Outer wall construction in accordance with one of the claims 1 to 11, **characterised in that** in the opaque zones (6) of the functional layer (5) are formed of an enamelling, organic coating, silicon layer or PVD [physical vapour deposition] layer.

13. Outer wall construction in accordance with one of the claims 1 to 12 except 2, **characterised in that** in the interspaces between the opaque zones (6) of the functional layer (5) are formed by the removal of material, e.g. by means of a laser.

## Revendications

1. Structure de paroi extérieure pour bâtiments, notamment panneau dans la zone d'appui de la paroi d'un bâtiment, sur laquelle il est prévu, dans le but d'exploiter l'énergie solaire, une coque extérieure (1) au moins partiellement perméable au rayonnement solaire, ainsi qu'une coque intérieure (3) présentant une couche thermiquement isolante (2), la coque extérieure (1) étant constituée de verre simple (4), de verre isolant à couches multiples, de verre feuilleté ou d'une combinaison de ces types de verre, **caractérisée en ce qu'**au moins une des surfaces de verre de la coque extérieure (1) située côté intérieur du bâtiment, c'est-à-dire la surface située en position 2, 3 ou plus, vu de l'extérieur, comporte une couche fonctionnelle (5) qui est partiellement perméable au rayonnement solaire mais n'est pas transparente et est formée de zones opaques (6) disposées à la manière d'îlots et réparties de façon régulière ou irrégulière sur la surface de verre, les espaces (7) entre les zones opaques (6) ne dépassant à aucun endroit une largeur maximale prédéterminée, laquelle se détermine à partir de la distance d'observation minimale possible, de manière telle que les espaces (7) ne puissent pas être discernés par l'oeil humain.

2. Structure de paroi extérieure pour bâtiments, notamment panneau dans la zone d'appui de la paroi d'un bâtiment, sur laquelle il est prévu, dans le but d'exploiter l'énergie solaire, une coque extérieure (1) au moins partiellement perméable au rayonnement solaire, ainsi qu'une coque intérieure (3) présentant une couche thermiquement isolante (2), la coque extérieure (1) étant constituée de verre simple (4), de verre isolant à couches multiples, de verre feuilleté ou d'une combinaison de ces types de verre, **caractérisée en ce qu'**au moins une des surfaces de verre de la coque extérieure (1) située côté intérieur du bâtiment, c'est-à-dire la surface située en position 2, 3 ou plus, vu de l'extérieur, comporte une couche fonctionnelle (5) qui est partiellement perméable au rayonnement solaire mais n'est pas transparente et est formée d'une fine couche de peinture ou d'émail, l'épaisseur de cette couche de peinture ou d'émail étant choisie en fonction de l'énergie solaire à transmettre et au moins de façon telle qu'elle paraisse opaque à l'oeil humain.

3. Structure de paroi extérieure selon la revendication 1 ou 2, **caractérisée en ce que** le choix du rapport de surface entre les zones opaques (6) et les espaces (7) qui les séparent et/ou de l'épaisseur de la couche de peinture ou d'émail permet d'adapter la résistance au passage de la chaleur R]a[ définie par la coque extérieure (1) et le degré de transmission d'énergie totale g de celle-ci, de telle sorte qu'en présence du rayonnement solaire maximal possible prévu et de la température extérieure maximale prévue en été, d'une part la température maximale à l'intérieur de la structure de paroi soit telle qu'elle puisse être supportée par les matériaux de la paroi, sans détérioration de ceux-ci, et d'autre part que la température maximale au niveau de la surface intérieure de la paroi soit telle que les personnes se trouvant dans le local la ressentent encore comme étant agréable.

4. Structure de paroi extérieure selon l'une des revendications 1 à 3, **caractérisée en ce que** l'une des surfaces de verre de la coque extérieure (1) présente une couche décorative (8) sous la forme d'un motif de couleurs et/ou de structures, qui détermine l'aspect optique de la coque extérieure de la structure de paroi extérieure.

5. Structure de paroi extérieure selon la revendication 4, **caractérisée en ce que**, pour une coque extérieure (1) en verre feuilleté, la couche fonctionnelle (5) se trouve en position 2, 3 ou 4, la couche décorative (8) en position 1 ou 2 et, le cas échéant, une couche L-E (9) en position 4.

6. Structure de paroi extérieure selon la revendication 4, **caractérisée en ce que**, pour une coque extérieure (1) en verre isolant double, la couche décorative (8) se trouve en position 1 et/ou 2, la couche fonctionnelle (5) en position 3 et/ou 4 et, le cas échéant, une couche L-E (9) en position 3 et/ou 4.

7. Structure de paroi extérieure selon la revendication 6, **caractérisée en ce que** la couche décorative (8) en position 2 est combinée avec la couche fonctionnelle (5) ou une couche L-E (9).

8. Structure de paroi extérieure selon la revendication 6, **caractérisée en ce qu'**il est prévu une couche antisolaire et de type L-E (9) en position 2, la couche fonctionnelle (5) en position 3 et une couche L-E (9) en position 4.

9. Structure de paroi extérieure selon la revendication 4, **caractérisée en ce que**, pour une coque extérieure (1) en verre isolant triple, les positions 1 à 4 sont agencées conformément à la revendication 5 et la position 5 présente une couche fonctionnelle (5) ou une couche L-E (9).

10. Structure de paroi extérieure selon l'une des revendications 1 à 9, **caractérisée en ce que** les zones opaques (6) de la couche fonctionnelle (5) sont de couleur noire ou de n'importe quelle autre couleur, en prenant en compte des critères esthétiques ainsi que l'influence sur la valeur g.

11. Structure de paroi extérieure selon l'une des revendications 1 à 10, **caractérisée en ce que** les zones opaques (6) de la couche fonctionnelle (5) ont la forme de cercles, de carrés, de rectangles, de triangles, d'hexagones, de structures linéaires ou de réseaux.

12. Structure de paroi extérieure selon l'une des revendications 1 à 11, **caractérisée en ce que** les zones opaques (6) de la couche fonctionnelle sont formées d'un émail, d'un revêtement organique, d'une couche de silicone ou d'une couche PVD.

13. Structure de paroi extérieure selon l'une des revendications 1 à 12, à l'exception de la revendication 2, **caractérisée en ce que** les espaces entre les zones opaques (6) de la couche fonctionnelle (5) sont réalisés par enlèvement de matière, par exemple à l'aide d'un laser.
